# EUROPÄISCHE PATENTANMELDUNG

(11) **EP 3 795 357 A1**
(43) Veröffentlichungstag der Anmeldung: **24.03.2021**
(21) Anmeldenummer: 20186838.7
(22) Anmeldetag: 30.01.2014
(51) Int. Cl.: B32B 38/08, B32B 38/00, B32B 7/12, B32B 21/04, B32B 21/13, B32B 21/14, B27N 3/04

(54) **VERFAHREN ZUM HERSTELLEN EINES HOLZWERKSTOFFS UND HOLZWERKSTOFF AUS EINER TRAEGERPLATTE UND EINEM FURNIER**

(62) Teilanmeldung aus: 16177811.3
(71) Anmelder: Välinge Innovation AB, 263 65 Viken (SE)
(72) Erfinder: KALWA, Norbert, 32805 Horn-Bad Meinberg (DE)
(74) Vertreter: Välinge Innovation AB

(57) **Zusammenfassung**

Die Erfindung betrifft einen Fuflbodenbelag mit einer Tragerplatte und einem Furnier, die miteinander durch ein Kunstharz verbunden sind. Um eine verbesserte Druckfestigkeit bzw. eine verbesserte Optik und Haptik des Fuflbodenbelags zu erreichen, ist vorgesehen, dass ein Furnier auf der Oberseite (3) und ein optional Furnier auf der Unterseite (4) der Tragerplatte (2) angeordnet ist, und dass das Furnier in der Starke komprimiert ist, und dass das Kunstharz (7) mindestens 30% der Fumierstarke durchdringt. Weiter ist ein Verfahren zum Herstellen eines Holzwerkstoffs Gegenstand der Erfindung.

## Beschreibung

Die Erfindung betrifft ein Verfahren zum Herstellen eines Holzwerkstoffs, bei dem eine Traegerplatte und ein Furnier durch ein Kunstharz verbunden sind sowie eine Holzwerkstoffplatte. Die Erfindung auch betrifft einen Fußbodenbelag und ein Verfahren zum Herstellen eines Fußbodenbelags.

Holzwerkstoffe, die eine Furnieroberflaeche aufweisen, sind bekannt. Sie bestehen ueblicherweise aus einem Holzwerkstofftraeger (z.B. hochdichte Faserplatte (HDF), OSB-Platte, Spanplatte), einem mit sparsamen Leimauftrag aufgeleimten Furnier und einer Oberflaechenverguetung, typischerweise einer Lackierung auf der Basis von UV-haertenden Lacken oder elektronenstrahlhaertenden Lacken. Die verwendeten Furniere weisen meist eine Staerke von 0,8 mm bis 2,5 mm auf. Zur Verklebung der Furniere auf der Traegerplatte werden meist Harnstoff- oder Polyvinylacetatleime mit den entsprechenden Haertern eingesetzt. Auf der Rueckseite des Produkts befindet sich in der Regel ein Gegenzug auf Basis von Papier, Vorimpraegnat oder Furnier, der die Spannungsgeometrie im Produkt gewaehrleisten soll. Derartige Produkte sind bekannt, so z.B. aus der DE 103 00 247, bei der ein Oriented Strand Board(OSB-Platte) als Traegerplatte und ein Furnier mittels Kunstharz miteinander verbunden sind, wobei zwischen Furnier und OSB-Platte ein Papier, ein so genanntes Underlay angeordnet ist, um ein Durchscheinen der OSB-Platte zu vermeiden. Aus der DE 10 2006 052 293 ist eine Traegerplatte, ebenfalls eine OSB-Platte, bekannt, die mittels Kunstharz mit einem Furnier verbunden ist. Die Furnieroberflaeche ist bedruckt. Durch das Bedrucken wird ein Dekor erzeugt, das dann mit einem Lack oder Kunstharzueberzug versiegelt wird.

Schliesslich ist eine Lindura (R) Holzwerkstoffplatte der Schulte GmbH, Ruethen-Meiste bekannt, bei der eine hochdichte Faserplatte (HDF-Platte) als Traegerplatte mit einem Furnier verbunden ist, wobei die Verbindung durch eine Schicht aus einer pulverfoermigen Mischung aus Holz und Kunstharz hergestellt wird. Auf der dem Furnier abgewandten Seite ist ein Gegenzug aufgebracht. Der Fokus liegt hier auf dem sparsamen Einsatz des Kunstharzes durch den Einsatz von recyceltem Holzpulver.

Furnierte Oberflaechen sind als Echtholz-Oberflaechen sehr geschaetzt. Sie weisen eine angenehme Haptik auf und erzeugen angenehme akustische Verhaeltnisse. Saemtlichen bekannten Holzwerkstoffen mit einer Furnieroberflaeche ist jedoch gemein, dass sie wegen der geringen Rohdichte des Furniers von meist nur 300 kg/m³ bis 500 kg/m³ nur eine geringe Druckfestigkeit aufweisen, die nur fuer wenige Verwendungen akzeptabel ist. Insbesondere im Bereich der Fussbodenbelaege sind furnierte Oberflaechen kaum einsetzbar, weil das Furnier durch herabfallende Gegenstaende schnell durchschlagen wird, der UV- oder strahlungshaertende Lack aber nicht repariert werden kann.

Es stellt sich daher die Aufgabe, einen Holzwerkstoff bereitzustellen, bei dem auf einer Traegerplatte ein in seiner Druckfestigkeit verbessertes Furnier bereitgestellt wird.

Diese Aufgabe wird geloest durch ein Verfahren nach Anspruch 1 und einen Holzwerkstoff nach Anspruch 11.

Das Verfahren zum Herstellen eines Holzwerkstoffs geht von einer Traegerplatte und einem Furnier aus, die miteinander durch ein Kunstharz verbunden sind. Erfindungsgemaess wird jedoch, abweichend zum Stand der Technik, zum Verbinden von Traegerplatte und Furnier ein fluessiges Kunstharz im ueberschuss auf Traegerplatte und/oder Furnier aufgebracht. Ueberschuss bezeichnet hier die Menge an Kunstharz, die, bezogen auf die zum Verleimen erforderliche Menge, zusaetzlich auf Traegerplatte und/oder Furnier aufgebracht wird. Dann wird das im ueberschuss aufgebrachte Kunstharz getrocknet, aber nicht ausgehaertet. Traegerplatte und Furnier werden zu einem Pressgutstapel gefuegt und der Pressgutstapel wird in einer Hochdruckpresse zu einem Holzwerkstoff verpresst.

Das erfindungsgemaesse Verfahren sieht vor, dass der Pressgutstapel in einer Hochdruckpresse, ueblicherweise eine Durchlauf- oder Kurztaktpresse (KT-Presse), verpresst wird. Das bei Presstemperaturen wieder verfluessigte Kunstharz wird dabei in das weniger dichte Furnier gepresst; die meist dichtere Oberflaeche der Traegerplatte nimmt weniger Kunstharz auf. Gleichzeitig wird das Furnier durch den Druck, den die Hochdruckpresse ausuebt, komprimiert. Beide Effekte wirken synergistisch zusammen und steigern die Druckfestigkeit der Furnieroberflaeche. Die nach dem Komprimieren hoehere Dichte des Furniers ist ebenso ein Beitrag zu einer hoeheren Druckfestigkeit wie das mindestens abschnittsweise Durchtraenken des Furniers mit Kunstharz. Beide Massnahmen widersprechen den ueblichen Massnahmen zur Herstellung eines Holzwerkstoffs mit einer Furnieroberflaeche. Zum einen wird ueblicherweise Kunstharz, das nur zum Fixieren des Furniers auf der Traegerplatte dient, mit meist bis zu 100g/m² (bezogen auf 100 percent) Feststoff sparsam eingesetzt und zum anderen vermeidet man das Pressen in einer Hochdruckpresse, um ein Komprimieren des Furniers zu vermeiden. Es hat sich jedoch herausgestellt, dass das Aussehen und die Haptik des erfindungsgemaessen Holzwerkstoffs unveraendert aesthetisch ansprechend sind.

Wesentliches Merkmal der Erfindung ist es, dass das Kunstharz, bezogen auf die zum Verleimen erforderliche Menge, im ueberschuss eingesetzt wird, weil vorgesehen ist, dass das erneut verfluessigte Kunstharz beim Pressvorgang das Furnier teilweise durchdringt bzw. zwischen die Fasern des Furniers vordringt und dort aushaertet. Das Eindringen des Kunstharzes in das Furnier ist zum Fixieren des Furniers auf der Traegerplatte nicht erforderlich, dafuer genuegt ein oberflaechlicher Kontakt mit dem Kunstharz. Der ueberschuss betraegt, bezogen auf die zum Verleimen des Furniers erforderliche Menge an Kunstharz, mindestens 30 percent. Vorteilhaft betraegt die Menge an Kunstharz, die bei dem erfindungsgemaessen Verfah-ren eingesetzt werden, mehr als 50 percent, bevorzugt mehr als 100 percent, besonders bevorzugt von mehr als 200 percent der zum Verleimen des Furniers erforderlichen Menge an Kunstharz.

Das Einbringen von Stoffen, die das Eindringen des Kunstharzes in das Furnier verzoegern oder unterbinden, z.B. von Holzmehl, ist von Nachteil. Holzmehl wird eingesetzt, um das "Durchschlagen" von Kunstharz zu verhindern, also gerade das Eindringen von Kunstharz in das Furnier bis zur Furnieroberflaeche. Ein aktuelles Beispiel hierfuer ist die vorstehend beschriebene "Lindura" (R) Platte. Die erfindungsgemaessen Mengenvorgaben koennen, ausgehend vom ueblichen und bekannten Verleimen eines Furniers auf einer Traegerplatte und den dort eingesetzten Mengen an Kunstharz von ueblicherweise bis 100 g/m² bezogen auf 100 percent Feststoff, mit wenigen orientierenden Versuchen vom Fachmann ermittelt und optimiert werden.

Bereits mit Einsatz von 130 g/m² Kunstharz koennen die positiven Effekte des erfindungsgemaessen Verfahrens und des erfindungsgemaessen Holzwerkstoffs wahrgenommen werden. Nach einer vorteilhaften Ausfuehrung der Erfindung werden mindestens 150 g/m² Kunstharz eingesetzt, um Furnier und Traegerplatte zu verbinden sowie die Druckfestigkeit des Furniers zu steigern. Weiter bevorzugt werden mindestens 200 g/m², insbesondere mindestens 300 g/m², vorteilhaft bis zu 400 g/m² Kunstharz eingesetzt. Saemtliche Angaben zum Kunstharz im Zusammenhang mit dieser Erfindung beziehen sich auf 100 percent Feststoff. Das Furnier soll in den meisten Anwendungen nur teilweise, ausgehend von der Traegerplatte mit Kunstharz getraenkt sein. Die Furnieroberflaeche ist in diesem Fall eine reine Holzoberflaeche. Es ist aber auch ohne weiteres moeglich, das Furnier vollstaendig mit Kunstharz zu traenken, so dass das Kunstharz die Furnieroberflaeche abdeckt.

Dieser ueberschuss an Kunstharz ist haeufig nicht in einem Arbeitsgang bzw. in einer Schicht auf die Platte aufzubringen. Nach einer vorteilhaften Ausfuehrung der Erfindung wird das fluessige Kunstharz in einer ersten und in einer zweiten Schicht aufgebracht, wobei optional das in der ersten Schicht aufgebrachte Kunstharz vor dem Aufbringen der zweiten Schicht getrocknet wird. Dieser Ablauf kann mehrfach wiederholt werden, z.B. wenn bis zu sechs oder mehr Schichten Kunstharz auf die Traegerplatte aufgebracht werden. Bei dem Trocknen des Kunstharzes ist darauf zu achten, dass zwar die Fliessfaehigkeit herabgesetzt oder gestoppt wird, dass jedoch die Reaktivitaet des Kunstharzes mindestens teilweise erhalten bleibt, so dass in der Presse eine Bindung zwischen Traegerplatte, Kunstharz und Furnier entsteht. Das Kunstharz wird also nach dem Auftragen in fluessiger Form getrocknet, aber nicht ausgehaertet. Das getrocknete Kunstharz kann klebrig sein. Grundsaetzlich koennte das Kunstharz auch auf das Furnier aufgetragen werden, allerdings laesst es die geringe Festigkeit des Furniers in der Regel nicht zu, Kunstharz im ueberschuss aufzubringen. Damit im Verpressungsprozess moeglichst wenig Melaminharz in die Holzwerkstoffplatte (HWS-Platte) migriert, kann auch zunaechst auf die Oberflaeche der Platte eine Schicht eines wenig fliessenden, duroplastischen Kunstharzes oder eines Gemisches aufgebracht werden. Es kann sich dabei um Harnstoff-Formaldehyd-Harz oder um ein Gemisch aus Harnstoff-Formaldehyd-Harz (UF-Harz) und Melamin-Formaldehyd-Harz (MF-Harz) mit einem hohen Anteil an UF-Harz handeln. Auch diese Harze wuerden natuerlich vor dem Auftrag weiterer Harzschichten vorgetrocknet werden, bleiben jedoch reaktiv.

Das Kunstharz kann auf Wunsch eingefaerbt sein, so dass beim Eindringen des Kunstharzes in das Furnier optisch wahrnehmbare Effekte erzielt werden, entweder um im Zusammenwirken mit anderen Massnahmen wie dem Bedrucken des Furniers eine hochwertigere optische Wirkung zu erreichen oder um z.B. um bei einem besonders duennen Furnier die Traegerplatte abzudecken. Haeufig verwendete Farbtoene sind beige oder braune Farbtoene.

Zur Durchfuehrung der Erfindung sind Kunstharze geeignet, die unter Druck und bei Einwirken erhoehter Temperatur, insbesondere unter den nachfolgend geschilderten Pressbedingungen zunaechst verfluessigen und dann aushaerten. Besonders typisch und geeignet ist Melaminharz. In das Melaminharz koennen bei Bedarf Korund oder andere bekannte Zuschlagstoffe eingebracht sein, die z.B. die Abrieb- oder Kratzfestigkeit der Oberflaeche verbessern. Auch Fasern, insbesondere Cellulosefasern, bevorzugt verhornte Cellulosefasern koennen zur besseren Schichtbildung in das Melaminharz eingebracht sein. Die zum Aufleimen von Furnier auf Traegerplatten ueblicherweise verwendeten Harnstoff- oder Polyvinylacetatleime eignen sich nicht gut fuer eine Verwendung in einer Hochdruckpresse, zum einen weil sie unter den dort herrschenden Druck- und Temperaturbedingungen nicht verfluessigen, in das Furnier eindringen und dort aushaerten. Zum anderen ist z.B. Harnstoff nicht lichtecht und wuerde bei weitgehender Durchdringung des Furniers nach kurzer Zeit zu einem Vergilben fuehren.

Das Verpressen des Pressgutstapels erfolgt erfindungsgemaess in einer Hochdruckpresse. Eine uebliche Furnierpresse zum Aufbringen von Furnieren auf Traegerplatten, die mit einem Pressdruck von 3 N/m² bis 5 N/m², einer Presstemperatur von bis zu 120 degrees centigrade und einer Pressdauer von drei bis fuenf Minuten arbeitet, ist nicht ausreichend, um in wirtschaftlicher Weise, insbesondere in vertretbarer Zeit, die grossen Mengen an Kunstharz zu verpressen und auszuhaerten. Der Druck der Furnierpressen genuegt ausserdem nicht, um das Furnier zu komprimieren. Erfindungsgemaess wird daher vorgeschlagen, Hochdruckpressen wie z.B. Durchlaufpressen oder Kurztaktpressen einzusetzen, bei denen ein Pressdruck zwischen 25 N/mm² und 50 N/mm² eingestellt werden kann. Die Presszeit betraegt in einer Hochdruckpresse zwischen 20 Sekunden und 60 Sekunden. Die Presstemperatur betraegt zwischen 160 degrees centigrade und 200 degrees centigrade Unter diesen, im Vergleich zu einer konventionellen Furnierpresse, scharfen Bedingungen wird gewaehrleistet, dass das Kunstharz mindestens abschnittsweise in das Furnier eindringt, und dass das Furnier komprimiert wird. In einem erfindungsgemaessen Holzwerkstoff sind eine Traegerplatte und ein Furnier durch Kunstharz miteinander verbunden, wobei das Furnier komprimiert ist und das Kunstharz mindestens 30 percent der Furnierstaerke durchdringt. Das Kunstharz durchdringt nach einer bevorzugten Ausfuehrung mindestens 50 percent der Furnierstaerke, vorteilhaft mindestens 70 percent der Furnierstaerke, maximal jedoch 100 percent der Furnierstaerke. Diese Angaben beziehen sich auf den Holzwerkstoff und damit auf das komprimierte Furnier. Das Furnier wird vorteilhaft um mindestens 30 percent der urspruenglichen Staerke komprimiert, vorteilhaft um mindestens 50 percent, nach einer bevorzugten Ausfuehrung maximal um bis zu 90 percent der urspruenglichen Staerke. Trotz des Komprimierens bleibt eine aesthetisch und haptisch ansprechende Furnieroberflaeche erhalten. Versuche haben gezeigt, dass sich das Einbringen des, bezogen auf das einfache Verleimen, ueberschuessigen Kunstharzes unproblematisch gestaltet, weil das wieder verfluessigte Kunstharz beim Verpressen Luft aus dem Furnier verdraengt und in Zwischenraeume zwischen den Holzfasern eindringt und dort ausgehaertet wird. Auf diese Weise bewirkt das eindringende Kunstharz eine Steigerung der Druckfestigkeit.

Die vorstehende Beschreibung zeigt die zahlreichen Vorteile des erfindungsgemaessen Verfahrens bzw. des erfindungsgemaessen Holzwerkstoffs. Das hier vorgeschlagene Verfahren ist mit bekannten Anlagen einfach und aufgrund der kurzen Pressdauer auch sehr wirtschaftlich durchzufuehren. Versuche zum Profilieren des erfindungsgemaessen Holzwerkstoffs haben gezeigt, dass die Kantenbearbeitung auf einfache und praezise Weise durchgefuehrt werden kann; Ausrisse am Furnier, die nach einem Kantenschnitt fuer bekannte Furnierplatten leider ueblich sind, kommen hier nicht vor. Der erfindungsgemaesse Holzwerkstoff ist nicht nur fuer Wand- und Deckenplatten, sondern auch fuer Fussbodenbelaege geeignet. Zudem laesst sich der Holzwerkstoff ausgezeichnet fuer Moebel oder Moebelteile mit beanspruchten Oberflaechen einsetzen, ohne dass hier die Echtholzoberflaeche aufgegeben werden muss. Hervorzuheben ist insbesondere die gute Bestaendigkeit gegen Feuchtigkeit, insbesondere, wenn das Kunstharz das Furnier zu mehr als 50 percent durchdringt.

Die Furnieroberflaeche, d.h., die von der Traegerplatte wegweisende, sichtbare Oberflaeche des Furniers des Holzwerkstoffs kann vor oder waehrend, insbesondere aber auch nach dem Verpressen, einer Oberflaechenbehandlung unterzogen werden. Insbesondere das Praegen der Holzoberflaeche, um reliefartige bzw. dreidimensionale Strukturen zu erhalten, die z.B. eine holzartentypische Porenstruktur verleihen kann waehrend oder nach dem Verpressen des Pressgutstapels durchgefuehrt werden. Aber auch das Bedrucken der Furnieroberflaeche, z.B. um eine holzartentypische Faerbung der Furnieroberflaeche zu erreichen, kann erfolgen, vorzugsweise nach dem Verpressen des Pressgutstapels. Nach einer vorteilhaften Weiterbildung der Erfindung erfolgen das Praegen und das Bedrucken aufeinander bezogen, so dass ein synchrones Dekor entsteht, bei dem Farbgebung und -anordnung sowie Praegung aufeinander synchron abgestimmt sind. Das Praegen und Bedrucken kann insbesondere genutzt werden, um einem optisch wenig ansprechenden Furnier eine hochwertigere Anmutung zu geben.

Die Furnieroberflaeche, die ggf. bedruckt und/oder gepraegt ist, kann dann geoelt oder lackiert werden. Oelen und Lackieren sind uebliche Schutzmassnahmen fuer Furnieroberflaechen. Alternativ kann die ggf. bedruckte und/oder gepraegte Furnieroberflaeche auch mit einem Overlay, also einem kunstharzgetraenkten Papier beschichtet werden, so wie es ueberwiegend fuer Laminatprodukte ueblich ist. Die Pressbedingungen in einer Hochdruckpresse reichen aus, um ein Overlay auf der Furnieroberflaeche zu fixieren.

Der Pressgutstapel kann nach einer weiteren Ausfuehrung der Erfindung auch ein Underlay aufweisen, ein ggf. kunstharzgetraenktes Papier oder Vlies, das beim Verpressen mit Traegerplatte und Furnier verbunden wird. Ein Papier oder insbesondere ein Vlies, das z.B. mit einem Flaechengewicht von 30 g/m² bis 50 g/m² eingesetzt wird, verleiht dem Furnier auf dem Holzwerkstoff gemaess der Erfindung eine weiter gesteigerte Druckfestigkeit, da das Vlies auf das Furnier einwirkende Druckkraefte verteilt und ableitet. Wirkt im Kugelfalltest gemaess DIN EN 13329 eine Kugel auf die Furnieroberflaeche eines Holzwerkstoffs ein, hinterlaesst die Kugel eine kleinere Kalotte, also eine geringere Verformung, wenn unter dem Furnier ein Vlies oder ein Papier angeordnet ist. Ein Papier oder ein Vlies koennen sich auch dann als vorteilhaft erweisen, wenn das Furnier in kleineren Abmessungen verarbeitet wird als die Traegerplatte. Es vereinfacht das Fuegen des Pressgutstapels wesentlich, wenn die Furnierstuecke vorab auf einem Papier oder Vlies gefuegt und fixiert sind, wobei das Papier oder Vlies die Abmessungen der Traegerplatte aufweist. Der Verbund aus Papier oder Vlies und Furnierstuecken kann dann auf einfache Weise mit der mit fluessigem, dann getrocknetem Kunstharz beschichteten Traegerplatte angeordnet werden.

Auf einer dem Furnier abgewandten Unterseite der Traegerplatte kann nach einer vorteilhaften Ausfuehrung der Erfindung ein Gegenzug angeordnet werden, der fuer ausgeglichene Spannungsverhaeltnisse auf den beiden beschichteten Seiten der Traegerplatte sorgt. Der Gegenzug kann auf verschiedene Weise ausgefuehrt sein, z.B. durch Aufbringen eines harzgetraenkten Papiers, durch eine Kunstharzschicht oder durch Aufbringen eines Furniers. Wird eine Kunstharzschicht als Gegenzug gewaehlt, kann sie optional mit Fasern versehen sein. Die Spannungen, die sich an der Oberflaeche der Traegerplatte und ggf. im Furnier aufbauen, koennen durch Befeuchten ggf. reduziert werden. Da das fluessige Kunstharz auch nach dem Trocknen noch Wasser in den Pressgutstapel einbringt, bauen sich angesichts des ueberschusses an Kunstharz und des darin enthaltenen Wassers geringere Spannungen auf, so dass ggf. ein Holzwerkstoff ohne Gegenzug hergestellt werden kann bzw. der Gegenzug weniger Krafteinwirkung ausgleichen muss.

Als Traegerplatte kommen Holzwerkstoffplatten wie z.B. mineralisch oder mit Kunstharz gebundene Holzwerkstoffplatten, Spanplatte, OSB-Platte, HDF-Platte oder mitteldichte Faserplatte (MDF-Platte) in Frage, aber auch Sperrholzplatten, Furnierplatten, Stab- oder Staebchenplatten oder Massivholzplatten koennen verwendet werden. Aufgrund des ueberschusses an Kunstharz ist das erfindungsgemaesse Verfahren tolerant gegenueber Unebenheiten der Plattenoberflaeche, so dass auch Platten mit einer groeberen Oberflaechenstruktur verwendet werden koennen.

Das Furnier kann ein Schaelfurnier oder ein Messerfurnier sein. Es kann ein bedrucktes oder ein gepraegtes Furnier verwendet werden, es koennen aber auch auf Vlies oder Papier fixierte Furniere, insbesondere gefuegte Furnierstuecke verwendet werden.

Details der Erfindung werden anhand von Ausfuehrungsbeispielen naeher erlaeutert. Es zeigen:
- Fig. 1: eine schematische Darstellung des erfindungsgemaessen Holzwerkstoffs
- Fig. 2: eine schematische Darstellung des vollstaendig von Kunstharz durchdrungenen Furniers
- Fig. 3: eine schematische Darstellung des teilweise von Kunstharz durchdrungenen Furniers.

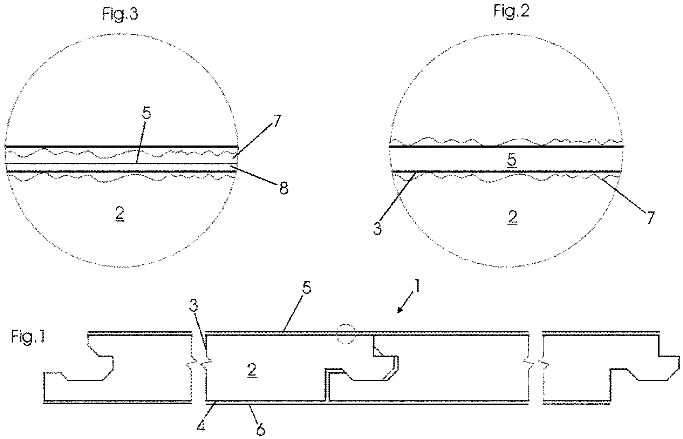

Fig. 1 zeigt eine schematische Darstellung des erfindungsgemaessen Holzwerkstoffs, hier einer Furnierplatte 1. Die Furnierplatte 1 weist eine Traegerplatte 2 auf, die auf der Oberseite 3 und der Unterseite 4 beschichtet ist. Auf der Oberseite 3 ist ein Furnier 5 angeordnet, auf der Unterseite 4 ist ein Gegenzug 6 angeordnet. Zwischen Traegerplatte 2 und Furnier 5 ist eine Kunstharzschicht 7 angeordnet, wobei das Kunstharz 7 teilweise oder vollstaendig in das Furnier 5 eingedrungen ist.

Als Traegerplatte koennen saemtliche vorstehend beschriebenen Platten aus Holz oder Holzwerkstoffmaterial eingesetzt werden. Die nachfolgend gewaehlten HDF-Platten koennen ohne weiteres durch andere Plattentypen ersetzt werden. Als Furnier koennen saemtliche vorgenannten Furniere eingesetzt werden, die nachfolgend beispielhaft eingesetzten Furniere koennen jederzeit durch andere Furniertypen ausgetauscht werden. Sowohl fuer die Traegerplatten als auch fuer das Furnier koennen Platten- oder Furnierstaerke oder die Dichte des Furniers variieren.

Zur Herstellung des erfindungsgemaessen Holzwerkstoffs sind nachfolgend Pressbedingungen spezifisch angegeben. Es ist anzumerken, dass dies nur ausgewaehlte Pressbedingungen sind, die vorstehend angegebenen Druck-, Temperatur- und Zeitintervalle erlauben ein Variieren der Pressbedingungen, beispielsweise eine Verkuerzung oder ein Verkuerzen der Presszeit bei erhoehtem Druck oder erhoehter Temperatur oder einer Erhoehung beider Parameter. Gleiches gilt fuer eine Senkung von Druck und/oder Temperatur mit einer einhergehenden Verlaengerung der Pressdauer.

Die verwendeten Kunstharze haben ueblicherweise Feststoffgehalte von 60 - 70 percent. Zur Reduzierung des Aufwandes des Trocknungsprozesses sowohl in energetischer als auch in maschinentechnischer Hinsicht, koennen die Kunstharze vor dem Auftrag mit Pulverharzen auf einen hoeheren Feststoffgehalt gebracht werden. Diese Gehalte koennen dann um 5-15 percent hoeher liegen.

### Ausfuehrungsbeispiel 1:

Ein Birken-Schaelfurnier mit einer Staerke von 1,05 mm und einer Dichte von 350 kg/m³ soll als Furnier 5 auf eine hochdichte Faserplatte (HDF-Platte) von 12 mm Plattenstaerke, Dichte: 850 kg/m³ als Traegerplatte 2 aufgebracht werden.

Erfindungsgemaess kann der ueberschuss an Kunstharz 7 in einem weiten Bereich eingestellt werden, von 130 g/m² bis ueber 400 g/m². Vorliegend sollte der Versuch unternommen werden, so viel Kunstharz 7 aufzutragen, dass das Furnier 5 vollstaendig von Kunstharz durchdrungen wird. Auf die HDF-Platte wurden deshalb nach diesem Ausfuehrungsbeispiel insgesamt 210g Kunstharz (100 percent Feststoff) in Form eines waessrigen Melaminharzes mit 60 percent Feststoffgehalt aufgebracht. Es wurden also 350 g/m² Melaminharz auf die Traegerplatte aufgebracht. Die 350 g/m² Melaminharz wurden in vier Schichten aufgetragen, mit jeder Schicht ein Viertel des Melaminharzes. Nach dem Auftragen von jeweils einem Viertel des Melaminharzes wurde das Kunstharz 7 in einem Umluftofen getrocknet bis das Melaminharz nicht mehr fluessig, aber noch klebrig war.

Vor dem Verpressen wurde auf der dem Furnier 5 abgewandten Unterseite 4 der Traegerplatte 2 ein Gegenzug 6 angeordnet, hier ein beharztes Papier mit einem Papiergewicht von 100 g/m² und einem Kunstharzauftrag von 120 percent der vorstehend beschriebenen 60 percent -igen Melaminharz verwendet.

In das noch klebrige Kunstharz wurde das vorstehend beschriebene Birken-Schaelfurnier eingelegt und in einer Laborpresse, die in ihren Leistungsmerkmalen einer Kurztaktpresse entspricht, verpresst. Die Presstemperatur betrug 165 degrees centigrade, die Pressdauer 1 Minute und der Pressdruck war auf 30 N/mm² eingestellt.

Das Birken-Schaelfurnier ist ein helles Furnier 5, das kaum Strukturmerkmale wie z.B. Poren aufweist. Das auf das Furnier 5 einwirkende Pressblech war strukturiert, es zeigte die Porenstruktur von Eiche.

Nach dem Verpressen wurde die erfindungsgemaess hergestellte Furnierplatte 1 untersucht. Es zeigte sich, dass das Melamin das Furnier vollstaendig durchdrungen hat, so wie in Fig. 2 dargestellt. Auf der Oberseite des Furniers 5 hatte sich eine vollstaendige Melaminharzschicht ausgebildet, die die Struktur des Pressblechs besass. Das Birken-Schaelfurnier der Furnierplatte 1 wies eine Staerke von 0,5 mm auf, es wurde also um mehr als 50 percent komprimiert. Der hergestellte Holzwerkstoff wies nicht nur die Porenstruktur einer Eiche-Oberflaeche auf. Durch das in das Furnier 5 eingedrungene Melamin wurde die Farbgebung des urspruenglich hellen Schaelfurniers dunkler, so dass auch die Farbgebung naeher an eine Eiche-Oberflaeche heranrueckte. Dieser Effekt kann durch Einfaerben des Melaminharzes intensiviert und gesteuert werden.

Die Furnieroberflaeche des Holzwerkstoffs wurde 6 Stunden mit Wasser beaufschlagt. Es wurde keine Quellung oder Verformung des Furniers 5 oder des Holzwerkstoffs insgesamt festgestellt.

### Ausfuehrungsbeispiel 2:

Fuer diese Ausfuehrung der Erfindung wurde eine mit dem Ausfuehrungsbeispiel 1 identische HDF-Platte als Traegerplatte 2 verwendet. Als Furnier 5 wird ein 0,9 mm Eichen-Messerfurnier verwendet. Es wurde das gleiche Melaminharz wie unter Ausfuehrungsbeispiel 1 verwendet. Allerdings betrug der Einsatz lediglich 150 g/m² bei 100 percent Feststoff, in dem 60 percent igen Melaminharz also 250 g/m².

Auf die Traegerplatte 2 wurde fluessiges Melaminharz im Mehrfachauftrag mit Zwischentrocknung aufgewalzt. Das Melaminharz wurde in drei Teilmengen eingeteilt und je eine Teilmenge wurde als einzelne Schicht aufgetragen, das jeweils fluessig aufgetragene Melaminharz wurde, wie in Ausfuehrungsbeispiel 1 beschrieben, im Umlufttrockner getrocknet.

In das getrocknete, aber noch klebrige Kunstharz 7 wurde zunaechst ein Glasvlies mit einem Flaechengewicht von 50 g/m² als Underlay 8 und anschliessend das Furnier 5, hier das Eichen-Messerfurnier, eingelegt. Als Gegenzug 6 wurde auf der Unterseite 4 der Traegerplatte 2 ein beharztes Papier mit einem Papiergewicht von 100 g/m² und einem Harzauftrag von 120 percent verwendet. Fuer den Harzauftrag wurde ebenfalls das 60 percent ige Melaminharz verwendet, das auch auf die Oberseite 3 der Traegerplatte 2 aufgebracht ist.

Der so hergestellte Pressgutstapel wurde in die bereits im Ausfuehrungsbeispiel 1 beschriebene Laborpresse ueberfuehrt und darin unter den gleichen Pressbedingungen mit glatten Pressblechen verpresst.

Der wie beschrieben hergestellte Holzwerkstoff, hier die Furnierplatte 1, wies eine attraktive Eichen-Oberflaeche auf. Das Eichen-Messerfurnier wies nach dem Verpressen eine Staerke von 0,4 mm auf. Es war damit, ausgehend von der urspruenglichen Staerke von 0,9 mm um mehr als 65 percent komprimiert. Das Eichen-Messerfurnier war zu 50 percent von Kunstharz durchtraenkt, so wie in Fig. 3 dargestellt. Es war kein Durchschlag des Melamins zu beobachten.

Die Furnieroberflaeche wurde anschliessend mit einem oel, das fuer Fussboden-anwendungen vorgesehen ist, behandelt. Der gemaess Ausfuehrungsbeispiel 2 hergestellte Holzwerkstoff konnte, ohne Ausrisse im Furnier festzustellen, in Paneele aufgeteilt werden. Die Paneele konnten ohne Schaeden am Eichen-Messerfurnier an den Kanten profiliert und als Fussbodenbelag eingesetzt werden.

### ARTIKEL

1. Verfahren zum Herstellen eines Holzwerkstoffs 1 bestehend aus einer Traegerplatte 2 und einem Furnier 5, die miteinander durch ein Kunstharz 7 verbunden sind, wobei
   - ein fluessiges Kunstharz 7 in einem bezogen auf die zum Verleimen erforderlichen Menge, ueberschuss von mindestens 30 percent auf Traegerplatte 2 und/oder Furnier 5 aufgebracht wird,
   - das aufgebrachte Kunstharz 7 getrocknet, aber nicht ausgehaertet wird,
   - Traegerplatte 2 und Furnier 5 zu einem Pressgutstapel gefuegt werden und
   - der Pressgutstapel unter Wirkung von Druck und Temperatur zu dem Holzwerkstoff 1 verpresst wird.
2. Verfahren nach Anspruch 1, dadurch gekennzeichnet, dass das Aufbringen des Kunstharzes 7 in einer oder mehreren Schichten und bezogen auf die zum Verleimen erforderliche Menge, mit einem ueberschuss von mindestens 50 percent, vorteilhaft von mindestens 100 percent, besonders bevorzugt von mindestens 200 percent erfolgt.
3. Verfahren nach mindestens einem der vorangehenden Artikel, dadurch gekennzeichnet, dass das zum Herstellen des Holzwerkstoffs 1 eingesetzte Kunstharz 7 eingefaerbt und/oder pigmentiert wird.
4. Verfahren nach mindestens einem der vorangehenden Artikel, dadurch gekennzeichnet, dass das Verpressen des Pressgutstapels kontinuierlich unter Verwendung einer Durchlaufpresse oder getaktet unter Verwendung einer Kurztaktpresse erfolgt.
5. Verfahren nach mindestens einem der vorangehenden Artikel, dadurch gekennzeichnet, dass das Furnier 5 waehrend des Verpressens um mindestens 30 percent, vorzugsweise um mindestens 50 percent, vorteilhaft um bis zu 90 percent der urspruenglichen Furnierstaerke komprimiert wird.
6. Verfahren nach mindestens einem der vorangehenden Artikel, dadurch gekennzeichnet, dass eine Furnieroberflaeche des Holzwerkstoffs 1 einer Oberflaechenbehandlung unterzogen wird, insbesondere gepraegt, bedruckt, geoelt oder lackiert wird.
7. Verfahren nach mindestens einem der vorangehenden Artikel, dadurch gekennzeichnet, dass eine Furnieroberflaeche des Holzwerkstoffs 1 gepraegt und bedruckt wird, wobei Praegen und Bedrucken ein synchrones Dekor aus Praegung und Bedruckung erzeugen.
8. Verfahren nach mindestens einem der vorangehenden Artikel, dadurch gekennzeichnet, dass eine Furnieroberflaeche des Holzwerkstoffs 1 mit einem Overlay beschichtet wird.
9. Verfahren nach mindestens einem der vorangehenden Artikel, dadurch gekennzeichnet, dass zwischen der Traegerplatte 2 und dem Furnier 5 ein Underlay 8 angeordnet ist, insbesondere ein Vlies oder ein Papier.
10. Verfahren nach mindestens einem der vorangehenden Artikel, dadurch gekennzeichnet, dass auf einer dem Furnier abgewandten Unterseite 4 der Traegerplatte 2 ein Gegenzug 6 aufgebracht ist.
11. Holzwerkstoff hergestellt nach dem Verfahren gemaess Anspruch 1 bis Anspruch 10, bestehend aus einer Traegerplatte 2 und einem Furnier 5, die miteinander durch ein Kunstharz 7 verbunden sind, dadurch gekennzeichnet, dass das Furnier 5 in seiner Furnierstaerke komprimiert ist, und dass das Kunstharz mindestens 30 percent der Furnierstaerke durchdringt, bevorzugt mindestens 50 percent der Furnierstaerke, vorteilhaft mindestens 70 percent der Furnierstaerke, maximal 100 percent der Furnierstaerke durchdringt.
12. Holzwerkstoff nach Anspruch 11, dadurch gekennzeichnet, dass die Furnieroberflaeche von einem Overlay ueberdeckt ist.
13. Holzwerkstoff nach mindestens einem der Artikel 11 oder 12, dadurch gekennzeichnet, dass die Furnieroberflaeche bedruckt und/oder gepraegt ist.
14. Holzwerkstoff nach mindestens einem der Artikel 11 bis 13, dadurch gekennzeichnet, dass die Furnieroberflaeche geoelt oder lackiert ist, insbesondere mit einem strahlungshaertenden Lack.
15. Holzwerkstoff nach mindestens einem der Artikel 11 bis 14, dadurch gekennzeichnet, dass ein Underlay 6 zwischen Traegerplatte 2 und Furnier 5 angeordnet ist, wobei das Underlay 6 bevorzugt ein Vlies oder ein Papier ist.
16. Fußbodenbelag aus Holzwerkstoff, bestehend aus einer Trägerplatte 2, einem ersten Furnier 5 auf der Oberseite 3, die miteinander durch ein Kunstharz 7 verbunden sind, sowie optional mit einem Overlay und/oder einem Underlay 8, und das Kunstharz 7 mindestens 30% der Furnierstärke des ersten Furniers 5 durchdringt.
17. Fußbodenbelag nach Artikel 16, dadurch gekennzeichnet, dass ein Overlay auf dem ersten Furnier 5 auf der Oberseite 3 der Trägerplatte 2 angeordnet ist.
18. Fußbodenbelag nach Artikel 16 oder 17, dadurch gekennzeichnet, dass ein Underlay 8 auf der Oberseite 3 der Trägerplatte 2 angeordnet ist.
19. Fußbodenbelag nach mindestens einem der Artikel 16 bis 18, dadurch gekennzeichnet, dass die Furnieroberfläche geölt oder lackiert ist, insbesondere mit einem strahlungshärtenden Lack.
20. Fußbodenbelag nach mindestens einem der Artikel 16 bis 19, dadurch gekennzeichnet, dass das erste Furnier 5 bedruckt und/oder geprägt ist.
21. Fußbodenbelag nach mindestens einem der Artikel 16 bis 20, dadurch gekennzeichnet, dass das Fußbodenbelag einem zweiten Furnier umfasst, wobei das zweite Furnier auf der Unterseite 4 der Trägerplatte 2 als Gegenzug 6 ausgeglichene Spannungsverhältnisse im Produkt gewährleisten soll.
22. Fußbodenbelag nach mindestens einem der Artikel 16 bis 21, dadurch gekennzeichnet, dass das erste Furnier 5 auf der Oberseite 3 um mindestens 30% der ursprünglichen Stärke komprimiert ist.
23. Verfahren zum Herstellen eines Fußbodenbelags aus Holzwerkstoff, bestehend aus einer Träger-platte 2 mit einem ersten Furnier 5 auf der Oberseite 3 umfasst, wobei das erste Furnier 5 und die Trägerplatte miteinander durch ein Kunstharz 7 verbunden sind, sowie optional mit einem Overlay und/oder einem Underlay 8, wobei
   - ein flüssiges Kunstharz 7 in einem, bezogen auf die zum Verleimen erforderliche Menge, Überschuss von mindestens 30% auf die Trägerplatte 2 und/oder das erste Furnier 5 aufgebracht wird,
   - das aufgebrachte Kunstharz 7 getrocknet, aber nicht ausgehärtet wird,
   - die Trägerplatte 2, das erste Furnier 5 und das zweite Furnier zu einem Pressgutstapel gefügt werden und
   - der Pressgutstapel unter Wirkung von Druck und Temperatur zu dem Holzwerkstoff verpresst wird und
24. Verfahren nach Artikel 23, dadurch gekennzeichnet, dass der Fußbodenbelag profiliert wird.
25. Verfahren nach Artikel 23 oder 24, dadurch gekennzeichnet, dass ein Overlay auf dem ersten Furnier 5 auf der Oberseite 3 der Trägerplatte 2 aufgelegt wird.
26. Verfahren nach mindestens einem der Artikel 23 bis 25, dadurch gekennzeichnet, dass ein Underlay 8 auf die Oberseite 3 der Trägerplatte 2 aufgelegt wird.
27. Verfahren nach mindestens einem der Artikel 23 bis 26, dadurch gekennzeichnet, dass die Furnieroberfläche geprägt, bedruckt geölt und /oder lackiert wird.
28. Verfahren nach mindestens einem der Artikel 23 bis 27, dadurch gekennzeichnet, dass das Fuß-bodenbelag einem zweiten Furnier auf der Unterseite 4 der Trägerplatte 2 umfasst.
29. Verfahren nach mindestens einem der Artikel 23 bis 28, dadurch gekennzeichnet, dass das erste Furnier 5 auf der Oberseite 3 der Trägerplatte 2 um mindestens 30% der ursprünglichen Stärke komprimiert wird.

## Patentansprüche

1. Fußbodenbelag aus Holzwerkstoff, bestehend aus einer Trägerplatte (2), einem ersten Furnier (5) auf der Oberseite (3), die miteinander durch ein Kunstharz (7) verbunden sind, sowie optional mit einem Overlay und/oder einem Underlay (8), und das Kunstharz (7) mindestens 30% der Furnierstärke des ersten Furniers (5) durchdringt.

2. Fußbodenbelag nach Anspruch 1, **dadurch gekennzeichnet, dass** ein Overlay auf dem ersten Furnier (5) auf der Oberseite (3) der Trägerplatte (2) angeordnet ist.

3. Fußbodenbelag nach Anspruch 1 oder 2, **dadurch gekennzeichnet, dass** ein Underlay (8) auf der Oberseite (3) der Trägerplatte (2) angeordnet ist.

4. Fußbodenbelag nach mindestens einem der Ansprüche 1 bis 3, **dadurch gekennzeichnet, dass** die Furnieroberfläche geölt oder lackiert ist, insbesondere mit einem strahlungshärtenden Lack.

5. Fußbodenbelag nach mindestens einem der Ansprüche 1 bis 4, **dadurch gekennzeichnet, dass** das erste Furnier (5) bedruckt und/oder geprägt ist.

6. Fußbodenbelag nach mindestens einem der Ansprüche 1 bis 5, **dadurch gekennzeichnet, dass** das Fußbodenbelag einem zweiten Furnier umfasst, wobei das zweite Furnier auf der Unterseite (4) der Trägerplatte (2) als Gegenzug (6) ausgeglichene Spannungsverhältnisse im Produkt gewährleisten soll.

7. Fußbodenbelag nach mindestens einem der Ansprüche 1 bis 6, **dadurch gekennzeichnet, dass** das erste Furnier (5) auf der Oberseite (3) um mindestens 30% der ursprünglichen Stärke komprimiert ist.

8. Verfahren zum Herstellen eines Fußbodenbelags aus Holzwerkstoff, bestehend aus einer Träger-platte (2) mit einem ersten Furnier (5) auf der Oberseite (3) umfasst, wobei das erste Furnier (5) und die Trägerplatte miteinander durch ein Kunstharz (7) verbunden sind, sowie optional mit einem Overlay und/oder einem Underlay (8), wobei
- ein flüssiges Kunstharz (7) in einem, bezogen auf die zum Verleimen erforderliche Menge, Überschuss von mindestens 30% auf die Trägerplatte (2) und/oder das erste Furnier (5) aufgebracht wird,
- das aufgebrachte Kunstharz (7) getrocknet, aber nicht ausgehärtet wird,
- die Trägerplatte (2), das erste Furnier (5) und das zweite Furnier zu einem Pressgutstapel gefügt werden und
- der Pressgutstapel unter Wirkung von Druck und Temperatur zu dem Holzwerkstoff verpresst wird und

9. Verfahren nach Anspruch 8, **dadurch gekennzeichnet, dass** der Fußbodenbelag profiliert wird.

10. Verfahren nach Anspruch 6 oder 7, **dadurch gekennzeichnet, dass** ein Overlay auf dem ersten Furnier (5) auf der Oberseite (3) der Trägerplatte (2) aufgelegt wird.

11. Verfahren nach mindestens einem der Ansprüche 8 bis 10, **dadurch gekennzeichnet, dass** ein Underlay (8) auf die Oberseite (3) der Trägerplatte (2) aufgelegt wird.

12. Verfahren nach mindestens einem der Ansprüche 8 bis 11, **dadurch gekennzeichnet, dass** die Furnieroberfläche geprägt, bedruckt geölt und /oder lackiert wird.

13. Verfahren nach mindestens einem der Ansprüche 8 bis 12, **dadurch gekennzeichnet, dass** das Fuß-bodenbelag einem zweiten Furnier auf der Unterseite (4) der Trägerplatte (2) umfasst.

14. Verfahren nach mindestens einem der Ansprüche 8 bis 13, **dadurch gekennzeichnet, dass** das erste Furnier (5) auf der Oberseite (3) der Trägerplatte (2) um mindestens 30% der ursprünglichen Stärke komprimiert wird.
